# EUROPÄISCHE PATENTSCHRIFT

(11) **EP 0 958 962 B1**
(45) Veröffentlichungstag und Bekanntmachung des Hinweises auf die Patenterteilung: **26.07.2006**
(21) Anmeldenummer: 99108179.5
(22) Anmeldetag: 26.04.1999
(51) Int. Cl.: B60Q 1/14

(54) **Hebelschalter**
Lever switch
Interrupteur à levier

(30) Priorität: 18.05.1998 DE 19822271
(43) Veröffentlichungstag der Anmeldung: 24.11.1999
(73) Patentinhaber: Delphi Technologies Inc., Troy, MI 48007 (US)
(72) Erfinder: Weiss, Hans Günter, 67550 Worms (DE); Besier, Holger, 65375 Oestrich-Winkel (DE)
(74) Vertreter: Becker, Bernd

(56) Entgegenhaltungen:
- FR-A- 2 732 284
- US-A- 5 049 706
- US-A- 5 120 914
- US-A- 5 661 276

## Beschreibung

Die Erfindung bezieht sich auf ein Verfahren zur Herstellung von Hebelschaltern, insbesondere Lenkstockschaltern für Kraftfahrzeuge, wobei die Hebelschalter mit einem Anschlußkontakte aufweisenden Gehäuse, einem in dem Gehäuse gelagerten Schalthebel, einem von dem Schalthebel betätigbaren, Schaltkontaktbahnen beaufschlagenden Schaltglied und einer den Schalthebel zurückstellenden bzw. verrastenden Schaltkulisse versehen sind, und einen Hebelschalter dazu.

Hebelschalter, insbesondere Lenkstockschalter für ein Kraftfahrzeug, mit einem Anschlußkontakte aufweisenden Gehäuse, einem in dem Gehäuse gelagerten Schalthebel, einem von dem Schalhebel betätigbaren, Schaltkontaktbahnen beaufschlagenden Schaltglied und einer den Schalthebel zurückstellenden bzw. verrastenden Schaltkulisse.

Aus der DE AS 28 10 790 sind zwei als Hebelschalter ausgeführte Lenkstockschalter bekannt, die über ein Trägergehäuse einem Mantelrohr einer Lenksäule eines Kraftfahrzeuges zugeordnet sind. Dabei befindet sich jeweils ein Hebelschalter rechts und links von der Lenksäule. Jeder Hebelschalter ist dabei für bestimmte Funktionen ausgelegt, die über vorbestimmte Verstellwinkel und Rast- bzw. Rückstellsysteme realisiert werden. Hierbei werden die Schalthebel auch in unterschiedlichen Richtungen zueinander betätigt. Die Gehäuse der Hebelschalter weisen eine unterschiedliche Höhe auf, wodurch zu deren Herstellung unterschiedliche Werkzeuge erforderlich sind. Weiterhin ist der Innenaufbau der Hebelschalter derart verschieden, daß viele unterschiedliche Einzelteile notwendig sind, um die jeweilige Schaltfunktionen sicherzustellen. Dies führt zu sehr hohen Werkzeug- und Lagerkosten der vielen Einzelteile, was die Herstellung der Hebelschalter wesentlich verteuert. Ferner ist in der Regel die zu fertigende Stückzahl nicht sehr hoch, wodurch der Einstieg in eine wirtschaftliche automatische Fertigung erschwert wird.

Die US-A-5 661 276 zeigt einen Hebelschalter mit einem Anschlusskontakte aufweisenden Gehäuse zur Lagerung eines Schalthebels, einem von dem Schalthebel betätigbaren, Schaltkontaktbahnen beaufschlagenden Schaltglied und einer den Schalthebel zurückstellenden bzw. verrastenden Schaltkulisse. Ein in den Schalthebel eingesetzter Wischerschalter kann beispielsweise gegen einen Scheinwerferschalter und ein ebenfalls in den Schalthebel eingesetzter Heck-Wischer-/ Wascherschalter gegen einen Nebellichtschalter ausgetauscht werden.

Der Erfindung liegt die Aufgabe zugrunde, ein Verfahren zur Herstellung eines Hebelschalters der eingangs genannten Art und einen Hebelschalter zu schaffen, das bzw. der der eine wirtschaftliche und kostengünstige Herstellung bei gleichzeitig gegebener Variation der Funktionen gewährleistet.

Diese Aufgabe wird erfindungsgemäß dadurch gelöst, daß die Schaltkulisse aus einer Gruppe von unterschiedlichen austauschbaren Schaltkulissen für unterschiedliche Schaltfunktionen, z. B. Wischer-/ Wascher-, Licht- und/oder Blinkerschaltfunktionen, ausgewählt wird und bei einer fest vorgegebenen Anordnung der Schaltkontaktbahnen durch eine unterschiedliche Trennung der Schaltkontaktbahnen, durch eine unterschiedliche Zuordnung und/oder Werte von Widerständen zu den Schaltkontaktbahnen und durch unterschiedliche, austauschbare Schaltkulissen unterschiedliche Schaltfunktionen des Hebelschalters realisiert werden.

Im Weiteren wird die Aufgabe durch einen Hebelschalter mit den Merkmalen des Anspruchs 2 gelöst.

Durch diese Maßnahmen, insbesondere durch die Verwendung nur eines Grund-Layouts der Schaltkontaktbahnen, ist durch eine geringe Anzahl unterschiedlicher Bauteile und den damit verbundenen geringen Werkzeugkosten eine kostengünstige Fertigung des Hebelschalters realisiert. Eine Identifizierung der gewünschten Schaltfunktion ist mittels einer dem Hebelschalter nachgeordneten Schaltlogik, die die entsprechenden Widerstandswerte und deren Anordnung ausgewertet, sichergestellt. Sonach ist die Verwendung des Hebelschalters nach dem Austausch bzw. der Modifikation einzelner Bauteile, wobei die wesentlichen in ihrer Fertigung aufwendigen Bauteile erhalten bleiben, zur Schaltung verschiedener Funktionen möglich.

Nach einer vorteilhaften Ausgestaltung der Erfindung besteht das Gehäuse aus einem Gehäuseoberteil und einem Gehäuseunterteil, die zwischen sich die Schaltkulisse und das Schaltglied aufnehmen, wobei dem Schaltglied die Schaltkontaktbahnen zugeordnet sind. Hieraus ergibt sich eine einfache Montage, bei der die Einzelteile in dem offenen Gehäuse lagerichtig angeordnet werden können.

Damit möglichst viele Schaltfunktionen realisiert werden können und stets eine exakte Ansteuerung der jeweiligen Schaltfunktion erreichbar ist, ist nach einer Weiterbildung der Erfindung der Schalthebel im Gehäuse kreuzgelenkig gelagert.

Um einen platzsparenden und robusten Aufbau des Kreuzgelenkes zu realisieren, ist zweckmäßigerweise die erste Drehachse des Kreuzgelenkes zwischen dem Gehäuseoberteil und dem Gehäuseunterteil mit einem zwischengeschaltetem Drehschaltglied und die zweite Schwenkachse des Kreuzgelenkes innerhalb des Drehschaltgliedes zwischen dem Schalthebel und dem Drehschaltglied angeordnet.

Zum einen sollen die Spritzwerkzeuge zur Herstellung der Einzelteile nicht so kompliziert und somit nicht teuer sein und zum anderen sollen die Kontaktfedern leicht den Schaltkontaktbahnen zuzuordnen sein, wobei Änderungen im Schaltbild einfach durchführbar sein sollen. Daher besteht nach einer weiteren Ausbildung der Erfindung das Drehschaltglied aus einem den Schalthebel aufnehmenden Mittelstück und einem, die zugehörigen Kontaktfedern halternden Kontaktträger; wobei das Mittelstück und der Kontakträger über Führungen miteinander verbunden sind. In dem Kontaktträger können unterschiedliche Kontaktfedern einfach befestigt werden, wobei ein kompletter Austausch eines bestückten, automatisch vorgefertigten Kontaktträgers möglich ist.

Nach einer weiteren Ausgestaltung der Erfindung weist das Drehschaltglied einen Durchbruch auf, durch den eine Schalthebelklaue ragt, und im Innern des Drehschaltgliedes eine senkrecht zur Schaltkulisse ausgerichtete, dem Ende des Schalthebels im Gehäuse zugeordnete Schwenkraste vorhanden ist. Sonach ergibt sich eine kompakte Bauart, da die beiden Schaltglieder eng beieinander angeordnet werden können, was wiederum eine kompakte Anordnung der Schaltkontaktbahnen ermöglicht.

Bei einer vorteilhaften Ausführungsform des Hebelschalters sind mindestens zwei Schaltglieder vorhanden, wobei das Drehschaltglied zwischen dem Gehäuseoberteil und dem Gehäuseunterteil gelagert ist, und ein Schwenkschaltglied senkrecht dazu im Gehäuseoberteil drehbeweglich gehaltert ist. Somit ist eine Entflechtung der Strompfade innerhalb des Gehäuses leicht durchführbar, wobei außerdem eine einfache Anpassung an unterschiedliche Schaltwinkel in den verschiedenen Schaltrichtungen gegeben ist.

Die Einzelteile im Schalterinnern sollen mit geringstem Materialeinsatz bei noch ausreichender Festigkeit und Sicherheit der elektrischen Funktion hergestellt werden. Daher besteht das Schwenkschaltglied aus zwei beabstandeten, den Seitenwänden parallel zugeordneten Schwenkscheiben, die durch einen Betätigungsstift miteinander verbunden sind, wobei die Schwenkscheiben einerseits die den Schaltkontaktbahnen zugeordneten Kontaktfedern tragen und andererseits je einen vom Betätigungsstift axial beabstandeten, jedoch koaxial zueinander angeordneten Schwenkzapfen tragen. Mit dem materialsparenden Betätigungsstift ist eine sichere Verbindung der Schwenkscheiben bei kleiner Bauweise erreicht. Der Abstand der Achsen vom Betätigungsstift und von den Schwenkzapfen ermöglicht ein sicheres Schalten der Kontaktpfade.

Zweckmäßigerweise umgreift die Schalthebelklaue des Schalthebels den Betätigungsstift des Schwenkschaltgliedes drehbar und betätigt das in den Seitenwänden des Gehäuseunterteils drehbar gelagerte Schwenkschaltglied. Somit ist auf einfache Weise das Betätigen des Schwenkschaltgliedes gewährleistet. Einerseits erfolgt die Lagerung des Schwenkschaltgliedes über die Schwenkzapfen in den Seitenwanden des Gehäuseunterteils und andererseits durch das Einliegen des Betätigungsstiftes in der Schalthebel klaue, wodurch seine eindeutige Lage bestimmt ist.

Um eine Vielzahl von getrennten Strompfaden zu schalten, weist bevorzugt das Drehschaltglied mindestens eine Kontaktfeder auf, die zum Gehäuseunterteil ausgerichtet ist, und senkrecht dazu ist mindestens eine Kontaktfeder des Schwenkschaltgliedes vorhanden, dir einer Seitenwand des Gehäuseunterteils zugewandt ist. Weiterhin ist die Form der Kontaktfeder varierbar, wodurch sich eine vergrößerte Anzahl unterschiedlicher Strompfade ergibt.

Durch eine großflächige Ausbreitung der Schaltkontaktbahnen ist auch eine große Anzahl von Schaltpfaden möglich. Auch ist es möglich, das Layout der Schaltkontaktbahnen mäanderförmig anzuordnen. Daher sind zweckmäßigerweise die Schaltkontaktbahnen im Gehäuse auf der Innenseite des dem Gehäuseoberteil zugewandten Gehäuseunterteil und mindestens auf einer Innenseite einer Seitenwand des Gehäuseunterteils angeordnet, das sich zwischen dem Gehäuseunterteil und der Gehäuseinnenwand befindet.

Damit die Srhaltkontaktbahnen robust ausgeführt und für die Stromleitung im Querschnitt ausreichend bemessen werden können, sind nach einer vorteilhaften Ausführungsform die Schaltkontaktbahnen als mindestens ein Stanzgitter ausgebildet, das Kontaktstellen für das Befestigen der Widerstände und der Anschlußkontakte aufweist. Sonach kann der Hebelschalter direkt über die Anschlußkontakte elektrisch angeschlossen werden.

Um einen universellen Einsatz zu gewährleisten, muß der Hebelschalter auch Leerräume aufweisen, in denen nur Einzelteile für einen bestimmten Einsatzzweck eingebaut werden. Diese Leerräume bleiben beim Einsatz des Hebelschalters, z.B. als Wascherschalter, frei. Bevorzugt sind daher im Gehäuse im Bereich der Gehäuseinnenwand Aufnahmekammern für Einsatzteile eines bestimmten Einsatzzweckes und parallel zur Schaltkulisse ein Schlitz für einen Rückstellmechanismus eingearbeitet.

Die Schaltwinkel sollen zumindest teilweise sehr klein sein und trotzdem muß ein sicheres Verrasten bzw. Umschalten erreicht werden. Dabei sollen auch die großen einwirkenden Kräfte auf alle beim Umschalten beteiligten Teile sicher abzufangen, wobei wiederum eine Platzminimierung erwünscht ist. Dies wird nach einer weiteren Ausgestaltung dadurch erreicht, daß in das Drehschaltglied ein ein Drehrastelement aufnehmendes Rastloch eingelassen ist, wobei das Drehrastelement mit der Schaltkulisse zusammenwirkt, und im Innern des Schalthebels im Schalthebelende ein Schwenkrastelement in eine Bohrung eingesetzt ist, wobei das Schwenkrastelement mit der im Innern des Drehschaltgliedes angeordneten Schwenkraste zusammenwirkt.

Zweckmäßigerweise wird mit einem eingebautem Rückstellmechanismus, einer entsprechenden Schaltkulisse und mit einer entsprechenden Bestückung mit Widerständen ein Blinkerschalter mit Fahrlichtumschaltung realisiert. Beim Verschwenken des Schalthebels parallel zum Gehäuseunterteil erfolgt ein Verdrehen des Drehschaltgliedes und somit die Beaufschlagung der Blinkleuchten, wobei auch eine Taststellung vor dem Verrasten in der Blinkerstellung durchfahren wird. Aus der verrasteten Blinkerstellung wird der Hebelschalter entweder durch den Rückstellmechanismus in Zusammenwirkung mit der Lenksäule oder von Hand gelöst. Die gewünschten Lichtumschaltfunktionen werden über das Schwenkschaltglied unter Zusammenwirkung aller mit der Schwenkraste zusammenwirkenden Elemente ausgeführt.

Soll nun ein Wischerschalter mit Wascherfunktionen hergestellt werden, wird dieser bevorzugt unter Weglassung des Rückstellmechanismus, durch das Einsetzen einer entsprechenden Schaltkulisse sowie einer entsprechenden Bestückung mit Widerständen realisiert. Da alle Funktionen von Hand geschaltet und auch zurückgestellt werden, ist der Rückstellmechanismus nicht erforderlich. Die Front-Wischerfunktionen werden mit dem Drehschaltglied, das parallel zum Gehäuseunterteil dreht, geschaltet. Die Heck-Wischer-/Wascherfunktionen werden mit dem Schwenkschaltglied geschaltet.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:
- Fig. 1: eine Seitenansicht auf einen erfindungsgemäßen Hebelschalter,
- Fig. 2: eine Unteransicht auf den Hebelschalter nach Fig. 1 in Pfeilrichtung II,
- Fig. 3: einen Längsschnitt durch den Hebelschalter nach Fig. 2 entlang der Linie III-III in vergrößertem Maßstab,
- Fig. 4: eine perspektivische Ansicht in das bestückte Gehäuseoberteil des erfindungsgemäßen Hebelschalters,
- Fig. 5: eine perspektivische Ansicht in das teilweise bestückte Gehäuseunterteil des Hebelschalters,
- Fig. 6: eine perspektivische Ansicht in das Innere des Gehäuseunterteils mit eingesetztem Schwenkschaltglied und teilweisem Drehschaltglied,
- Fig. 7: eine perspektivische Ansicht auf den montierten Hebelschalter ohne Gehäuseoberteil und ohne Rückstellmechanismus,
- Fig. 8: eine perspektivische Ansicht auf den montierten Hebelschalter ohne Gehäuseoberteil, jedoch mit Rückstellmechanismus und
- Fig. 9: eine perspektivische Ansicht auf einen montierten Hebelschalter ohne Gehäuseunterteil.

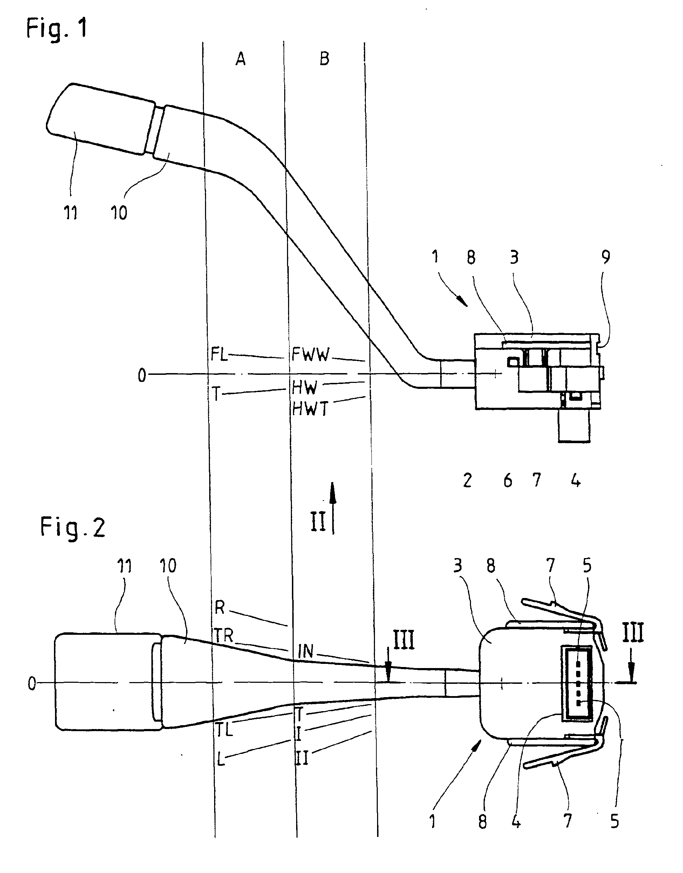

In den Fig. 1 und 2 ist ein Hebelschalter in kompletter Ansicht dargestellt, wobei dieser Hebelschalter keinen Rückstellmechanismus aufweist, was durch den im Schlitz 9 fehlenden Auslöser erkennbar ist. Der Hebelschalter umfaßt ein Gehäuse 1, das im wesentlichen aus einem Gehäuseunterteil 2 und einem Gehäuseoberteil 3 besteht. Am Gehäuseunterteil 2 ist ein Steckerkragen 4 angeformt, der die Anschlußkontakte 5 vor Beschädigung schützt. Weiterhin weist das Gehäuseunterteil 2 Seitenwände 6 auf, die sich bis zum Gehäuseoberteil 3 erstrecken. Auf jeder Seite des Gehäuseoberteils 3 ist je ein federnder Verrastarm 7 zur Befestigung des Gehäuses 1 in einer nicht dargestellten Einsetzöffnung. Eine Führung des Gehäuses 1 in der Einsetzöffnung erfolgt über am Gehäuseoberteil 3 beidseitig angeformte Führungsstege 8. Zwischen den Seitenwänden 6 und gegenüber dem Schlitz 9 ragt aus dem Gehäuse 1 ein Schalthebel 10 heraus, der an seinem freien Ende einen Druckknopf 11 trägt.

In den Fig. 1 und 2 sind die vertikalen Schaltfunktionen für zwei unterschiedliche Hebelschalter eingezeichnet. Die Spalte A zeigt die Funktionen für einen Blinker-Hebelschalter mit selbsttätiger Rückstellung sowie mit Lichtumschaltfunktionen. Gemäß der Fig. 1 besitzt der Blinker-Hebelschalter eine AusStellung "0", eine getastete Stellung "T" für Lichthupe und eine gerastete Stellung "FL" für Fernlicht. In der Fig. 2 sind neben der Ausstellung "0" auf jeder Seite noch zwei Arbeitsstellungen vorhanden. Dies sind nach oben die Stellung "TR" für getastetes Blinken nach rechts und die Stellung "R" für gerastetes Blinken nach rechts. Analog sind die Stellungen "TL" und "L" für das Blinken nach links. In der Spalte B sind die Schaltfunktionen für einen Wischer-Wascher-Hebelschalter dargestellt. Entsprechend der Fig. 1 erreicht man im Uhrzeigersinn aus der Stellung "0" heraus die Arbeitsstellung "FWW" für Frontscheibe-Wischen-Waschen, getastet und entgegen dem Uhrzeigersinn zuerst die Stellung "HW" für Heckscheiben-Wischen, gerastet und anschließend die Arbeitsstellung "HWT" für Heckscheiben-Waschen, getastet. Die Schaltfolge nach Fig. 2 ist aus der "0" Stellung im Uhrzeigersinn die Arbeitsstellung "IN" , gerastet, für Intervall-Betrieb des Wischers. Entgegen dem Uhrzeigersinn folgt nach der "0" Stellung die Arbeitsstellung "T" , getastet, für Tippwischen und danach die beiden gerasteten Arbeitsstellungen "I" und "II" für Wischerbetrieb mit unterschiedlichen Wischergeschwindigkeiten. Aus allen getasteten Stellungen erfolgt eine selbsttätige Rückstellung in die "0" Stellung.

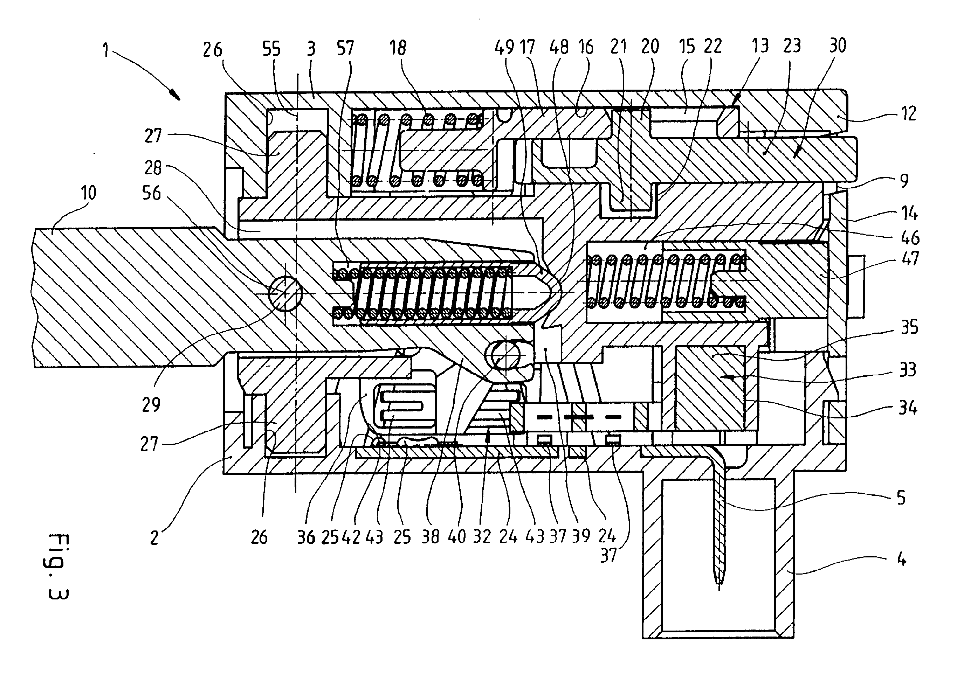

Der Hebelschalter gemäß Fig. 3 ist ein Blinker-Hebelschalter. der mit einem Rückstellmechanismus 13 versehen ist. Die geschnittene rechte Seitenwand ist Teil einer Schaltkulisse 14, die mittels eines im Werkzeug austauschbaren Wechseleinsatzes hergestellt und somit einstückig am Gehäuse 3 angeformt ist. Oberhalb der Schaltkulisse 14 ist der Schlitz 9 eingelassen, durch den sich ein Auslöser 12 des Rückstellmechanismus 13 erstreckt, der sich in einer Aufnahmekammer 15 an der Innenseite der Gehäuseinnenwand 16 befindet. Zum Rückstellmechanismus 13 gehört neben dem Auslöser 12 ein Zentrierstück 17 mit einer Rückstellfeder 18 und zwei Zugfedern 19. Der Auslöser 12 ist mit zwei Zapfen 20, 21 versehen, von denen der obere Zapfen 20 in ein Langloch 58 des Zentrierstückes 17 und der untere Zapfen 21 in eine Auslösekulisse 22 eines Mittelstückes 23 eines Drehschaltgliedes 30 eingreift. Über die Rückstellfeder 18, die sich an einer gehäusefesten Wand abstützt, wird das Zentrierstück 17 in Richtung der Schaltkulisse 14 gedrückt.

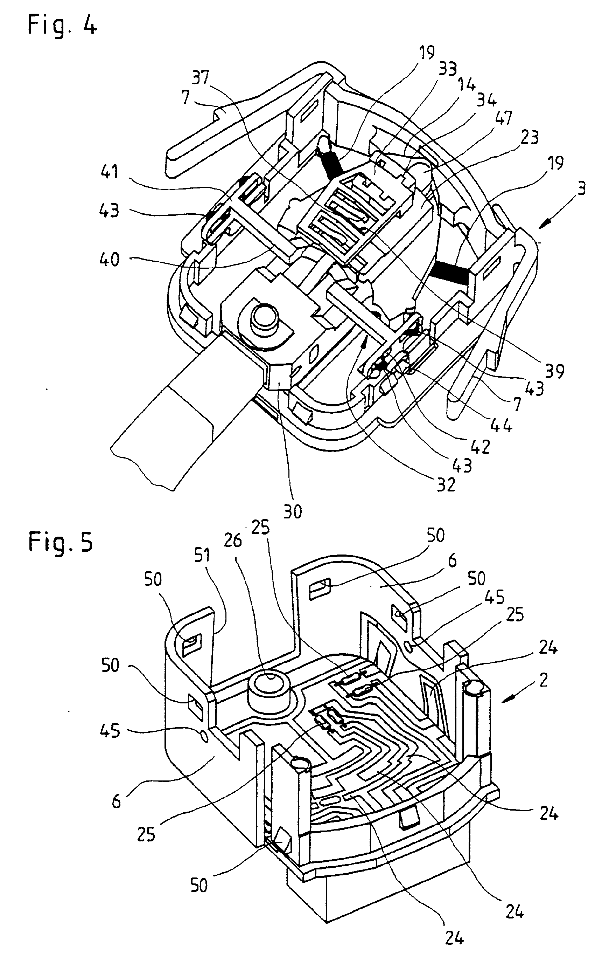

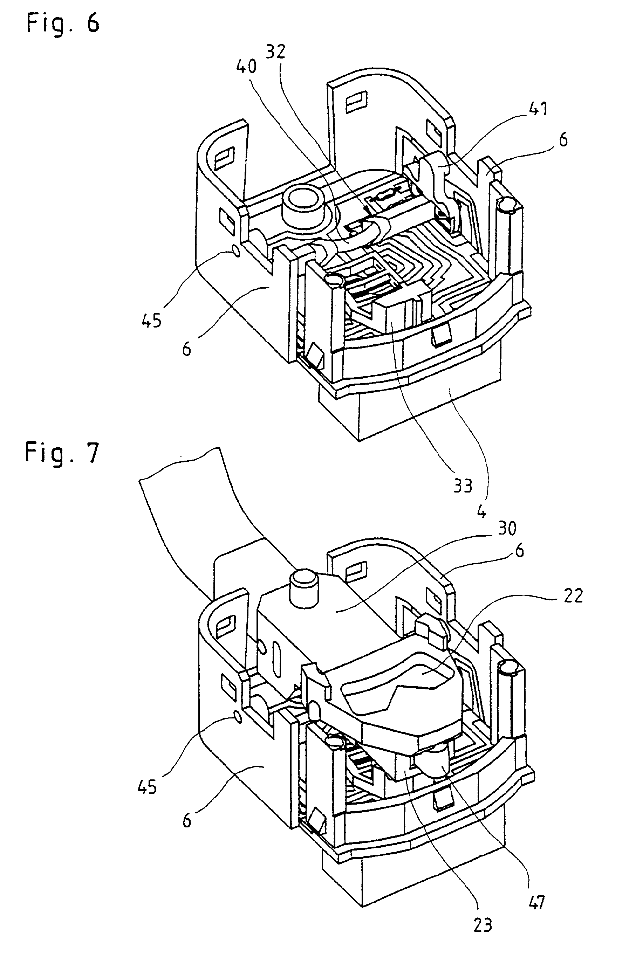

In den Boden des Gehäuseunterteils 2 sind Schalzkontaktbahnen 24 als Stanzgitter eingelassen, wobei nach dem Umspritzen die zwischen den Schaltkontaktbahnen 24 vorliegenden Stege durchtrennt sind. Im Bereich des Steckerkragens 4 weist das Stanzgitter eine Biegung auf und endet als Anschlußkontakt 5 im Steckerkragen 4. Auf der Innenseite sind auf den Schaltkontaktbahnen 24 Widerstande 25 aufgeschweißt, die deren Enden verbinden (siehe auch die Figuren 5 und 6).

In das Gehäuseunterteil 2 und das Gehäuseoberteil 3 ist jeweils eine koaxiale, hohlzylindrische Achsaufnahme 26 eingelassen, deren Öffnung in das Innere des Gehäuses 1 weist. Die Achsaufnahme 26, die eine erste Drehachse 55 eines Kreuzgelenkes bildet, nimmt entsprechende Achsen 27 auf, die am Mittelstück 23 angeformt sind. Um diese Achsen 27 schwenkt das Mittelstück 23 des Drehschaltgliedes 30 parallel zu den Schaltkontaktbahnen 24 bis es mit einer Außenwand an einer der Seitenwände 6 des Gehäuseunterteils 2 anschlägt. Das Verschwenken erfolgt durch Beaufschlagung des Schalthebels 10, der in einer Mittelstückaufnahme 28 mit einem Stift 29 drehbar festgesetzt ist. In Richtung der Zeichnungsebene ist zwischen der Mittelstückaufnahme 28 und dem als Spritzteil hergestelltem Schalthebel 10 nur ein geringes Spiel vorhanden. In der anderen Richtung, drehbar um den Stift 29 ist jedoch genügend Freiraum vorhanden, um z.B. die Arbeitsstellungen "FL" und "T" zu ermöglichen. Dem Schalthebel 10 ist noch eine zweite Drehachse 56 zugeordnet, wodurch er kreuzgelenkig bewegbar ist.

Zwischen dem Gehäuseoberteil 3 und dem Gehäuseunterteil 2 ist sowohl das Drehschaltglied 30 als auch ein Schwenkschaltglied 32 angeordnet. Das Drehschaltglied 30 wirkt nur mit Schaltkontaktbahnen 24 im Boden des Gehäuseunterteils 2 zusammen, während das Schwenkschaltglied 32 in Wirkverbindung mit den Schaltkontaktbahnen 24 in den Seitenwänden 6 des Gehäuseunterteils 2 steht. Das Drehschaltglied 30 setzt sich aus zwei Spritzteilen zusammen, nämlich dem Mittelstück 23 und einem Kontaktträger 33. An dem Mittelstück 23 ist eine in Richtung des Bodens des Gehäuseunterteils 2 weisende Führung 34 angeformt, in die ein Ansatz 35 des Kontaktträgers 33 eingesteckt ist. Am Ansatz 35 des Kontaktträgers 33 ist ein Durchbrechungen aufweisender Kontakthalter 36 befestigt, wobei in den Durchbrechungen Kontaktfedern 37 liegen, die im Kontakthalter 36 lagefest eingespritzt sind. Aus den Durchbrechungen ragen die Kontaktfedern 37 heraus und stehen, je nach Arbeitsstellung des Schalthebels 10, mit den Schaltkontaktbahnen 24 in Wirkverbindung.

Das Schwenkschaltglied 32 schwenkt um einen Stift 29, der die zweite Drehachse 56 des Kreuzgelenkes bildet. Die Drehachsen 55 und 56 sind geringfügig voneinander beabstandet. Die Betätigung des Schwenkschaltgliedes 32 erfolgt über den Schalthebel 10, der an seinem dem Mittelstück 23 zugeordneten freien Ende eine Schalthebelklaue 38 trägt. Die Schalthebelklaue 38 ragt durch einen Durchbruch 39 im Mittelstück 23 hindurch, wo sie einen Betätigungsstift 40 des Schwenkschaltgliedes 32 gleitbeweglich aufnimmt. Der Betätigungsstift 40 trägt an seinen den Seitenwänden 6 des Gehäuseunterteils 2 zugewandten Enden je eine Schwenkscheibe 41 mit Durchbrüchen 42, in die Kontaktfedern 43 liegen.

Die Ausgestaltung der Kontaktfedern 37 und 43 richtet sich nach der Anzahl der zu verbindenden Schaltkontaktbahnen 24. So ist es beim Blinker-Hebelschalter ausreichend, wenn die Kontaktfeder 43 nur einen federnden Arm aufweist.

Der die Schwenkscheiben 41 verbindende Betätigungsstift 40 besitzt eine Abkropfung nach der Art einer Pleuelstange mit der die Einleitung der Schwenkbewegung beabstandet von den Schwenkzapfen 44 in die Schwenkscheiben 41 erfolgt. Die Schwenkzapfen 44 befinden sich auf den den Seitenwänden 6 des Gehäuseunterteils 2 zugewandten Seiten der Schwenkscheiben 41. Sie sind koaxial ausgerichtet und ermöglichen so das leichte Verschwenken des Schwenkschaltgliedes 32, bei dem je nach Arbeitsstellung des Schalthebels 10 die Kontaktfedern 43 in Wirkverbindung mit den in den Seitenwänden 6 vorhandenen Schaltkontaktbahnen 24 stehen. Beim Betätigen des Schalthebels 10 um den Stift 29 schwenkt die Schalthebelklaue 38 mit. Folglich schwenkt auch das Schwenkschaltglied 32 mit, und zwar um seine Schwenkzapfen 44, die in entsprechenden Zapflöchern 45 in den Seitenwänden 6 des Gehäuseunterteils 2 gelagert sind. Die Schalthebelklaue 38 ist an ihrer offenen Seite geringfügig eingeschnürt um das Herausgleiten des Betätigungsstiftes 40 zu verhindern.

Im Mittelstück 23 des Drehschaltgliedes 30 ist der Schaltkulisse 14 gegenüberliegend ein Rastloch 46 eingelassen. In das Rastloch 46 ist ein federbelastetes Drehrastelement 47 eingesetzt, das sich unter der Federwirkung an der Schaltkulisse 14 abstützt und das Drehschaltglied in der Arbeitsstellung verrastet bzw. selbsttätig zurückstellt. Außerdem ist in das Mittelstück 23, dem Ende des Schalthebels 10 zugewandt, eine Schwenkraste 48 eingearbeitet. In der Schwenkraste 48 liegt ein federbelastetes, in einer Bohrung 57 des Schalthebels 10 geführtes Schwenkrastelement 49, das den Schalthebel 10 in seiner Arbeitsstellung verrastet oder zurückstellt.

Die Fig. 4 zeigt ein montiertes Gehäuseoberteil 3. Das aus dem Mittelstück 23 und dem Kontaktträger 33 bestehende Drehschaltglied 30 sowie das Schwenkschaltglied 32 sind frei sichtbar. Die den Schaltkontaktbahnen 24 zugewandten Kontaktfedern 37 und 43 ragen aus den Durchbrüchen 39 und 42 heraus. Weiterhin ist auch die Führung 34 zwischen dem Mittelstück 23 und dem Kontaktträger 33 erkennbar.

Die Fig. 5 veranschaulicht eine Ansicht auf das Gehäuseunterteil 2, in dem die Schaltkontaktbahnen 24 an der Innenseite frei liegen. Die als Stanzgitter ausgeführten Schaltkontaktbahnen 24 sind in den Seitenwänden 6 des Gehäuseunterteils 2 weitergeführt. Verschiedene Enden der Schaltkontaktbahnen 24 sind mittels Widerständen 25 verbunden. Aus dem Boden des Gehäuseunterteils 2 ragt die Achsaufnahme 26 heraus. Die Seitenwand 6 weist einen Ausschnitt 51 auf, durch den der Schalthebel 10 hindurchragen kann. In den Seitenwänden 6 sind Clipselemente 50 zur Verbindung des Gehäuseunterteils 2 mit dem Gehäuseoberteil 3 eingelassen.

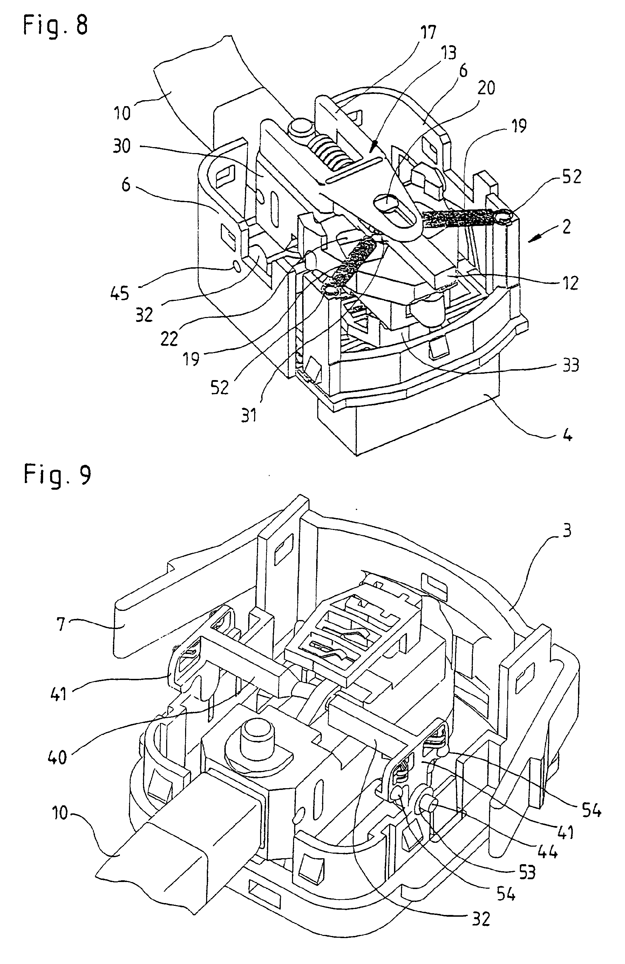

In Fig. 6 ist ein weiter montiertes Gehäuseunterteil 2 dargestellt. Neben dem Kontaktträger 33 ist das Schwenkschaltglied 32 eingesetzt. Die Schwenkzapfen (nicht sichtbar) befinden sich in den Zapflöchern 45. In der Darstellung nach Fig. 7 ist das Drehschaltglied 30 in das Gehäuseunterteil 2 eingesetzt. Oben befindet sich die Auslösekulisse 22 und vorne ragt aus dem Mittelstück 23 das Drehrastelement 47 heraus. Nach Fig. 8 ist auf dem Drehschaltglied 30 der Rückstellmechanismus 13 aufgesetzt, der den Auslöser 12 umfaßt, in dessen Ösen 31 die Zugfedern 19 eingehakt sind. Das andere Ende der Zugfedern 19 ist in an den Seitenwänden 6 des Gehäuseunterteils 2 angeordneten Haken 52 eingehängt. Weiterhin ist das federbelastete Zentrierstück 17 erkennbar, in dessen Langloch 58 der obere Zapfen 20 des Auslösers 12 liegt. Der untere Zapfen 21 liegt in der noch teilweise sichtbaren Auslösekulisse 22.

Die Fig. 9 zeigt ein vormontiertes Gehäuseoberteil 3. Alternativ ist hierbei der Schwenkzapfen 44 des Schwenkschaltgliedes 32 in im Gehäuseoberteil 3 eingelassene Zapflöcher 53 eingeclipst. Die Schwenkscheiben 41 tragen Distanznoppen 54, mit denen das Schwenkschaltglied 32 zwischen den Seitenwänden 6 des Gehäuseunterteils 2 zentriert wird. Weiterhin verhindern die Distanznoppen 54 eine Uberbelastung der Kontaktfedern 43.

### Bezugszeichenliste

- 1: Gehause
- 2: Gehäuseunterteil
- 3: Gehäuseoberteil
- 4: Steckerkragen
- 5: Anschlußkontakte
- 6: Seitenwande
- 7: Verrasiarm
- 8: Führungssteg
- 9: Schlitz
- 10: Schalthebel
- 11: Druckknopf
- 12: Ausloser
- 13: Rückstellmechanismus
- 14: Schaltkulisse
- 15: Aufnahmekammer
- 16: Gehauseinnenwand
- 17: Zentrierstuck
- 18: Ruckstellfeder
- 19: Zugfeder
- 20: oberer Zapfen
- 21: unterer Zapfen
- 22: Auslosekulisse
- 23: Mittelstuck
- 24: Schaltkontakte
- 25: Widerstande
- 26: Achsaufnahme
- 27: Achse
- 28: Mittelstuckaufnahme
- 29: Stift
- 30: Drehschaltglied
- 31: Ösen
- 32: Schwenkschaltglied
- 33: Kontaktträger
- 34: Führung
- 35: Ansatz
- 36: Kontakthalter
- 37: Kontaktfeder
- 38: Schalthebelklaue
- 39: Durchbruch
- 40: Betätigungsstift
- 41: Schwenkscheibe
- 42: Durchbruch
- 43: Kontaktfeder
- 44: Schwenkzapfen
- 45: Zapfloch
- 46: Rastloch
- 47: Drehrastelement
- 48: Schwenkraste
- 49: Schwenkrastelement
- 50: Clipselement
- 51: Ausschnitt
- 52: Haken
- 53: Zapflocher in 3
- 54: Distanznoppen
- 55: 1. Drehachse
- 56: 2. Drehachse
- 57: Bohrung
- 58: Langloch

## Patentansprüche

1. Verfahren zur Herstellung von Hebelschaltern, insbesondere Lenkstockschaltern für Kraftfahrzeuge, wobei die Hebelschalter mit
- einem Anschlußkontakte (5) aufweisenden Gehäuse (1),
- einem in dem Gehäuse (1) gelagerten Schalthebel (10)
- einem von dem Schalthebel (10) betätigbaren, Schaltkontaktbahnen (24) beaufschlagenden Schaltglied (30 bzw. 32) und
- einer den Schalthebel (10) zurückstellenden bzw. verrastenden Schaltkulisse (14)
versehen sind,
**dadurch gekennzeichnet , daß**
die Schaltkulisse (14) aus einer Gruppe von unterschiedlichen austauschbaren Schaltkulissen für unterschiedliche Schaltfunktionen, z. B. Wischer-/ Wascher-, Licht- und/oder Blinkerschaltfunktionen, ausgewählt wird, und bei einer fest vorgegebenen Anordnung der Schaltkontaktbahnen (24), durch eine unterschiedliche Trennung der Schaltkontaktbahnen (24), durch eine unterschiedliche Zuordnung und/oder Werte von Widerständen (25) zu den Schaltkontaktbahnen (24) und durch unterschiedliche, austauschbare Schaltkulissen (14) unterschiedliche Schaltfunktionen des Hebelschalters realisiert werden.

2. Hebelschalter, insbesondere Lenkstockschalter für Kraftfahrzeuge, wobei der Hebelschalter mit
- einem Anschlußkontakte (5) aufweisenden Gehäuse (1),
- einem in dem Gehäuse (1) gelagerten Schalthebel (10)
- einem von dem Schalthebel (10) betätigbaren, Schaltkontaktbahnen (24) beaufschlagenden Schaltglied (30 bzw. 32) und
- einer den Schalthebel (10) zurückstellenden bzw. verrastenden austauschbaren Schaltkulisse (14), versehen ist,
- wobei bei einer fest vorgegebenen Anordnung der Schaltkontaktbahnen (24), durch eine unterschiedliche Trennung der Schaltkontaktbahnen (24), durch eine unterschiedliche Zuordnung und/oder Werte von Widerständen (25) zu den Schaltkontaktbahnen (24) und durch unterschiedliche, austauschbare Schaltkulissen (14) unterschiedliche Schaltfunktionen des Hebelschalters realisiert sind,
erhältlich durch das Verfahren nach Anspruch 1, **dadurch gekennzeichnet , daß** mindestens zwei Schaltglieder (30, 32) vorhanden sind, wobei das Drehschaltglied (30) zwischen dem Gehäuseoberteil (3) und dem Gehäuseunterteil (2) gelagert ist, und ein Schwenkschaltglied (32) senkrecht dazu im Gehäuseoberteil (3) drehbeweglich gehaltert ist.

3. Hebelschalter nach Anspruch 2, **dadurch gekennzeichnet , daß** das Gehäuse (1) aus einem Gehäuseoberteil (3) und einem Gehäuseunterteil (2) besteht, die zwischen sich die Schaltkulisse (14) und das Schaltglied (30 bzw. 32) aufnehmen, wobei dem Schaltglied (30 bzw. 32) die Schaltkontaktbahnen (24) zugeordnet sind.

4. Hebelschalter nach den Ansprüchen 2 und 3, **dadurch gekennzeichnet , daß** der Schalthebel (10) im Gehäuse (1) kreuzgelenkig gelagert ist.

5. Hebelschalter nach Anspruch 4, **dadurch gekennzeichnet , daß** die erste Drehachse (55) des Kreuzgelenkes zwischen dem Gehäuseoberteil (3) und dem Gehäuseunterteil (2) mit einem zwischengeschalteten Drehschaltglied (30) und die zweite Schwenkachse (56) des Kreuzgelenkes innerhalb des Drehschaltgliedes (30) zwischen dem Schalthebel (10) und dem Drehschaltglied (30) angeordnet ist.

6. Hebelschalter nach Anspruch 5, **dadurch gekennzeichnet , daß** das Drehschaltglied (30) aus einem den Schalthebel (10) aufnehmenden Mittelstück (23) und einem die zugehörigen Kontaktfedern (37) halternden Kontaktträger (33) besteht, wobei das Mittelstück (23) und der Kontakträger (33) über Führungen (34) miteinander verbunden sind.

7. Hebelschalter nach den Ansprüchen 5 und 6, **dadurch gekennzeichnet , daß** das Drehschaltglied (30) einen Durchbruch (39) aufweist, durch den eine Schalthebelklaue (38) ragt, und im Innern des Drehschaltgliedes (30) eine senkrecht zur Schaltkulisse (14) ausgerichtete, dem Ende des Schalthebels (10) im Gehäuse (1) zugeordnete Schwenkraste (48) vorhanden ist.

8. Hebelschalter nach Anspruch 2, **dadurch gekennzeichnet , daß** das Schwenkschaltglied (32) aus zwei beabstandeten, den Seitenwänden (6) des Gehäuseunterteils (2) parallel zugeordneten Schwenkscheiben (41) besteht, die durch einen Betätigungsstift (40) miteinander verbunden sind, wobei die Schwenkscheiben (41) einerseits die den Schaltkontaktbahnen (24) zugeordneten Kontaktfedern (43) tragen und andererseits je einen vom Betätigungsstift (40) axial beabstandeten, jedoch koaxial zueinander angeordneten Schwenkzapfen (44) tragen.

9. Hebelschalter nach den Ansprüchen 2 und 8, **dadurch gekennzeichnet , daß** die Schalthebelklaue (38) des Schalthebels (10) den Betätigungsstift (40) des Schwenkschaltgliedes (32) drehbar umgreift und das in den Seitenwänden (6) des Gehäuseunterteils(2) drehbar gelagerte Schwenkschaltglied (32) betätigt.

10. Hebelschalter nach einem der Ansprüche 2 bis 9, **dadurch gekennzeichnet , daß** das Drehschaltglied (30) mindestens eine Kontaktfeder (37) aufweist, die zum Gehäuseunterteil (2) ausgerichtet ist, und senkrecht dazu mindestens eine Kontaktfeder (43) des Schwenkschaltgliedes (32) vorhanden ist, die einer Seitenwand (6) des Gehäuseunterteils (2) zugewandt ist.

11. Hebelschalter nach einem der Ansprüche 2 bis 10, **dadurch gekennzeichnet , daß** die Schaltkontaktbahnen (24) im Gehäuse (1) auf der Innenseite des dem Gehäuseoberteil (3) zugewandten Gehäuseunterteil (2) und mindestens auf einer Innenseite einer Seitenwand (6) des Gehäuseunterteils (2) angeordnet sind, die sich zwischen dem Gehäuseunterteil (2) und der Gehäuseinnenwand (16) befindet.

12. Hebelschalter nach einem der Ansprüche 2 bis 11, **dadurch gekennzeichnet , daß** die Schaltkontaktbahnen (24) als mindestens ein Stanzgitter ausgebildet sind, das Kontaktstellen für das Befestigen der Widerstände (25) und der Anschlußkontakte (5) aufweist.

13. Hebelschalter nach einem der Ansprüche 2 bis 12, **dadurch gekennzeichnet , daß** im Gehäuse (1) im Bereich der Gehäuseinnenwand (16) Aufnahmekammern für Einzelteile eines bestimmten Einsatzzweckes und parallel zur Schaltkulisse (14) ein Schlitz (9) für einen Rückstellmechanismus (13) eingearbeitet sind.

14. Hebelschalter nach einem der Ansprüche 2 bis 13, **dadurch gekennzeichnet , daß** in das Drehschaltglied (30) ein ein Drehrastelement (47) aufnehmendes Rastloch (46) eingelassen ist, wobei das Drehrastelement (47) mit der Schaltkulisse (14) zusammenwirkt, und im Innern des Schalthebels (10) im Schalthebelende ein Schwenkrastelement (49) in eine Bohrung (57) eingesetzt ist, wobei das Schwenkrastelement (49) mit der im Innern des Drehschaltgliedes (30) angeordneten Schwenkraste (48) zusammenwirkt.

15. Hebelschalter nach den Ansprüchen 13 und 14, **dadurch gekennzeichnet , daß** mit einem eingebautem Rückstellmechanismus (13), einer entsprechenden Schaltkulisse (14) und mit einer entsprechenden Bestückung mit Widerständen (25) ein Blinkerschalter mit Fahrlichtumschaltung realisiert wird.

16. Hebelschalter nach einem der Ansprüche 2 bis 15, **dadurch gekennzeichnet , daß** unter Weglassung des Rückstellmechanismus (13), durch das Einsetzen einer entsprechenden Schaltkulisse (14) sowie einer entsprechenden Bestückung mit Widerständen (25) ein Wischerschalter mit Wascherfunktion realisiert wird.

## Claims

1. Procedure for the production of lever switches, in particular steering-column switches for motor vehicles, whereby the lever switch is provided with
- a housing (1) exhibiting connection contacts (5),
- a switch lever (10) mounted in the housing (1),
- a switching element (30 and 32) which can be activated by the switch lever (10) and which exerts pressure on the switch contact paths (24) and
- shift gates (14) resetting or engaging the switch lever (10), **characterised in** such a way that the shift gate (14) is selected from a group of different exchangeable shift gates for different switching functions, e.g. wiper/washer, light and/or indicator switching functions, and that different switching functions of the switch lever are realised with a firmly specified arrangement of the switching contact paths (24), through a different allocation and/or values of resistors (25) to the switching contact paths (24) and through different, exchangeable shift gates (14).

2. Lever switch, in particular steering-column switches for motor vehicles, whereby the lever switch is provided with
- a housing (1) exhibiting connection contacts (5),
- a switch lever (10) mounted in the housing (1),
- a switch element (30 and 32) which can be activated by the switch lever (10) and which exerts pressure on the switch contact paths (24) and
- shift gates (14) resetting or engaging the switch lever (10),
- whereby different switching functions of the switch lever are realised with a firmly specified arrangement of the switching contact paths (24), through a different allocation and/or values of resistors (25) to the switching contact paths (24) and through different, exchangeable shift gates (14),
attainable through the procedure according to Claim 1, **characterised in** such a way that at least two switching elements (30 and 32) are present, whereby the rotary switching element (30) is mounted between the housing upper part (3) and the housing lower part (2), and a swivel switching element (32) is retained for rotational-movement vertically to this in the housing upper part (3).

3. Lever switch according to Claim 2, **characterised in** such a way that the housing (1) consists of a housing upper part (3) and a housing lower part (2), which retain the shift gate (14) and the switching element (30 and 32) between them, whereby the switching contact paths (24) are assigned to the switching element (30 and 32).

4. Lever switch according to Claims 2 and 3, **characterised in** such a way that the switch lever (10) is mounted in the housing (1) with a universal joint.

5. Lever switch according to Claim 4, **characterised in** such a way that the first rotary axis (55) of the universal joint is located between the housing upper part (3) and the housing lower part (2) with an interconnected rotary switching element (30), and the second swivelling axis (56) of the universal joint is located within the rotary switching element (30) between the switch lever (10) and the rotary switching element (30).

6. Lever switch according to Claim 5, **characterised in** such a way that the rotary switching element (30) consists of a centre piece (23) retaining the switch lever (10) and a contact carrier (33) holding the associated contact springs (37), whereby the centre piece (23) and the contact carrier (33) are connected to one another via guides (24).

7. Lever switch according to Claims 5 and 6, **characterised in** such a way that the rotary switching element (30) exhibits an opening (39), through which a switch lever claw (38) projects, and that a swivel latch (48), aligned vertically to the shift gate (14) and assigned to the end of the switch lever (10) in the housing (1), is present inside the rotary switching element (30).

8. Lever switch according to Claim 2, **characterised in** such a way that the swivel switching element (32) consists of two swivel disks (41) arranged at gaps parallel to the side walls (6) of the housing lower part (2), which are connected to each other through an actuating pin (40), whereby the swivel disks (41), on the one hand, bear the contact springs (43) assigned to the switching contact paths (24) and, on the other hand, each bear one swivel pin (44) each which are spaced axially, but arranged coaxially to one another.

9. Lever switch according to Claims 2 to 8, **characterised in** such a way that the switch lever claw (38) of the switch lever (10) rotationally encompasses the actuating pin (40) of the swivel switching element (32) and activates the swivel switching element (32) rotationally mounted in the side walls (6) of the housing lower part (2).

10. Lever switch according to Claims 2 to 9, **characterised in** such a way that the rotary switching element (30) exhibits at least one contact spring (37) which is aligned to the housing lower part (2), and at least one contact spring (43) of the swivel switching lever (32) is present vertically to this, which faces a side wall (6) of the housing upper part (2).

11. Lever switch according to Claims 2 to 10, **characterised in** such a way that the contact paths (24) in the housing (1) are located on the inner side of the housing lower part (2) facing the housing upper part (3) and at least on an inner side of a side wall (6) of the housing upper part (2), which is located between the housing lower part (2) and the housing inner wall (16).

12. Lever switch according to Claims 2 to 11, **characterised in** such a way that the switch contact paths (24) are formed as at least one pressed screen which exhibits contact points for fastening the resistors (25) and the connection contacts (5)

13. Lever switch according to Claims 2 to 12, **characterised in** such a way that retaining chambers for individual parts for a definite intended use and, parallel to the shift gate (14), a slit (9) for a reset mechanism (13), are incorporated in the housing (1) in the area of the housing inner wall (16).

14. Lever switch according to Claims 2 to 13, **characterised in** such a way that the rotary switch element (30) is incorporated in a latch hole (46) retaining a rotary latching element (47), whereby the rotary latching element (47) interacts with the shift gate (14) and a swivel latching element (49) is inserted into a bore hole (57) inside the switch lever (10) in the switch lever end, whereby the swivel latching element (49) interacts with the swivel latch (48) located inside the rotary switching element (30).

15. Lever switch according to Claims 13 and 14, **characterised in** such a way that an indicator switch with driving light switchover is realised with an integrated reset mechanism (13), a corresponding shift gate (14) and a corresponding installation of resistors (25).

16. Lever switch according to Claims 2 to 15, **characterised in** such a way that the a wiper switch with washer function is realised with omission of the reset mechanism (13), through the use of a corresponding shift gate (14) as well as a corresponding installation of resistors (25).

## Revendications

1. Procédé pour la fabrication de commutateurs à levier, en particulier de commutateurs de colonne de direction pour véhicules, les commutateurs à levier étant munis
- d'un boîtier (1) comprenant des contacts de connexion (5),
- d'un levier de commutation (10) supporté dans le boîtier (1)
- d'un organe de commutation (30 respectivement 32) actionnable par le levier de commutation (10), sollicitant des pistes de contact de commutation (24) et
- d'une coulisse de commutation (14) rappelant, respectivement bloquant le levier de commutation (10),
**caractérisé en ce que** la coulisse de commutation (14) est choisie parmi un groupe de coulisses de commutation échangeables différentes pour des fonctions de commutation différentes, par exemple fonctions de commutation essuie/lave-glaces, projecteurs et/ou clignotants, et, moyennant un agencement prédéfini des pistes de contact de commutation (24), des fonctions de commutation du commutateur à levier sont réalisées par une séparation différente des pistes de contact de commutation (24), par une association et/ou des valeurs de résistances (25) différentes entre les pistes de contact de commutation (24) et par des coulisses de commutation échangeables différentes (14).

2. Commutateur à levier, en particulier commutateur de colonne de direction pour véhicules, le commutateur à levier étant muni
- d'un boîtier (1) comprenant des contacts de connexion (5),
- d'un levier de commutation (10) supporté dans le boîtier (1)
- d'un organe de commutation (30 respectivement 32) actionnable par le levier de commutation (10), sollicitant des pistes de contact de commutation (24) et
- d'une coulisse de commutation (14) rappelant, respectivement bloquant le levier de commutation (10) ,
- moyennant un agencement prédéfini des pistes de contact de commutation (24), des fonctions de commutation du commutateur à levier sont réalisées par une séparation différente des pistes de contact de commutation (24), par une association et/ou des valeurs de résistances (25) différentes entre les pistes de contact de commutation (24) et par des coulisses de commutation échangeables différentes (14),
obtenu par le procédé selon la revendication 1, **caractérisé en ce qu'**au moins deux organes de commutation (30, 32) sont prévus, l'organe de commutation rotatif (30) étant monté entre la partie supérieure de boîtier (3) et la partie inférieure de boîtier (2), et un organe de commutation pivotant (32) étant supporté, de manière mobile en rotation, perpendiculairement au précédent dans la partie supérieure de boîtier (3).

3. Commutateur à levier selon la revendication 2, **caractérisé en ce que** le boîtier (1) est constitué d'une partie supérieure de boîtier (3) et d'une partie inférieure de boîtier (2), lesquelles reçoivent entre elles la coulisse de commutation (14) et l'organe de commutation (30 respectivement 32), les pistes de contact de commutation (24) étant associées à l'organe de commutation (30 respectivement 32).

4. Commutateur à levier selon les revendications 2 et 3, **caractérisé en ce que** le levier de commutation (10) est monté dans le boîtier (1) avec une articulation à joint de cardan.

5. Commutateur à levier selon la revendication 4, **caractérisé en ce que** le premier axe de rotation (55) de l'articulation à joint de cardan passe entre la partie supérieure de boîtier (3) et la partie inférieure de boîtier (2) avec un organe de commutation rotatif interposé (30), et le second axe de pivotement (56) de l'articulation à joint de cardan passe à l'intérieur de l'organe de commutation rotatif (30) entre le levier de commutation (10) et l'organe de commutation rotatif (30).

6. Commutateur à levier selon la revendication 5, **caractérisé en ce que** l'organe de commutation rotatif (30) est constitué d'une pièce centrale (23) recevant le levier de commutation (10) et d'un porte-contacts (33) supportant les ressorts de contact associés (37), la pièce centrale (23) et le porte-contacts (33) étant reliés entre eux par l'intermédiaire de guides (34).

7. Commutateur à levier selon les revendications 5 et 6, **caractérisé en ce que** l'organe de commutation rotatif (30) comporte un passage (39) que traverse une griffe de levier de commutation (38), et à l'intérieur de l'organe de commutation rotatif (30) est prévu un cran de basculement (48) orienté perpendiculairement à la coulisse de commutation (14), associé à l'extrémité du levier de commutation (10) dans le boîtier (1).

8. Commutateur à levier selon la revendication 2, **caractérisé en ce que** l'organe de commutation basculant (32) se compose de deux plaques de basculement distantes, disposées parallèlement aux parois latérales (6) de la partie inférieure de boîtier (2), qui sont reliées entre elles par une barre d'actionnement (40), les plaques de basculement (41) portant, d'une part, les ressorts de contact (43) associés aux pistes de contact de commutation (24) et, d'autre part, chacune un plot de basculement (44) distant axialement de la barre d'actionnement (40), les plots de basculement étant cependant coaxiaux entre eux.

9. Commutateur à levier selon les revendications 2 et 8, **caractérisé en ce que** la griffe de levier de commutation (38) du levier de commutation (10) entoure à pivotement la barre d'actionnement (40) de l'organe de commutation basculant (32) et actionne l'organe de commutation basculant (32) monté à pivotement dans les parois latérales (6) de la partie inférieure de boîtier (2).

10. Commutateur à levier selon une des revendications 2 à 9, **caractérisé en ce que** l'organe de commutation rotatif (30) comporte au moins un ressort de contact (37) qui est orienté vers la partie inférieure de boîtier (2), et perpendiculairement à celui-ci est prévu au moins un ressort de contact (43) de l'organe de commutation basculant (32), lequel est tourné vers une paroi latérale (6) de la partie inférieure de boîtier (2).

11. Commutateur à levier selon une des revendications 2 à 10, **caractérisé en ce que**, dans le boîtier (1), les pistes de contact de commutation (24) sont disposées sur le côté intérieur de la partie inférieure de boîtier (2) tournée vers la partie supérieure de boîtier (3) et au moins sur un côté intérieur d'une paroi latérale (6) de la partie inférieure de boîtier (2) qui se trouve entre la partie inférieure de boîtier (2) et la paroi intérieure de boîtier (16).

12. Commutateur à levier selon une des revendications 2 à 11, **caractérisé en ce que** les pistes de contact de commutation (24) sont conformées en au moins une grille estampée qui comporte des points de contact pour la fixation des résistances (25) et des contacts de connexion (5).

13. Commutateur à levier selon une des revendications 2 à 12, **caractérisé en ce que**, dans le boîtier (1), dans la zone de la paroi intérieure de boîtier (16) sont ménagées des chambres réceptrices pour des éléments individuels à usage déterminé et, parallèlement à la coulisse de commutation (14), une fente (9) pour un mécanisme de rappel (13).

14. Commutateur à levier selon une des revendications 2 à 13, **caractérisé en ce que** dans l'organe de commutation rotatif (30) est ménagé un trou de crantage (46) recevant un élément de crantage tournant (47), l'élément de crantage tournant (47) coopérant avec la coulisse de commutation (14) et, à l'intérieur du levier de commutation (10), un élément de crantage basculant (49) étant logé dans un perçage (57) à l'intérieur du levier de commutation (10), l'élément de crantage basculant (49) coopérant avec le cran de basculement (48) disposé à l'intérieur de l'organe de commutation rotatif (30).

15. Commutateur à levier selon les revendications 13 et 14, **caractérisé en ce qu'**avec un mécanisme de rappel intégré (13), une coulisse de commutation correspondante (14) et un équipement correspondant en résistances (25), on réalise un commutateur de clignotant avec commutation des projecteurs.

16. Commutateur à levier selon une des revendications 2 à 15, **caractérisé en ce qu'**en supprimant le mécanisme de rappel (13), en mettant en oeuvre une coulisse de commutation correspondante (14) et un équipement correspondant en résistances (25), on réalise un commutateur d'essuie-glaces avec fonction lave-glace.
